# EUROPEAN PATENT SPECIFICATION

(11) **EP 4 657 290 B1**
(45) Date of publication and mention of the grant of the patent: **26.08.2026**
(21) Application number: 24178804.1
(22) Date of filing: 29.05.2024
(51) Int. Cl.: G06F 21/51, G06F 21/57, H04L 9/32, H04L 9/40

(54) **TRANSPARENT INTEGRATION OF CONTAINER SIGNATURE VALIDATION**
TRANSPARENTE INTEGRATION VON CONTAINERSIGNATURVALIDIERUNG
INTÉGRATION TRANSPARENTE DE VALIDATION DE SIGNATURE DE CONTENEUR

(43) Date of publication of application: 03.12.2025
(73) Proprietor: Siemens Aktiengesellschaft, 80333 München (DE)
(72) Inventor: Hofmann, Benedikt, 82418 Murnau (DE); Knierim, Christian, 81373 München (DE)
(74) Representative: Siemens Patent Attorneys

(56) References cited:
- EP-A1- 4 131 040
- US-A1- 2023 259 386
- US-B1- 11 055 428

## Description

### TECHNICAL FIELD

The present disclosure relates to a system and a computer-implemented method for transparent integration of container signature validation.

### BACKGROUND

Container images may be signed using special container signature procedures such as Cosign, Notary v1 or Notary v2 and thus be secured in terms of integrity and authenticity.

Kubernetes is an open-source container orchestration system for automating software deployment, scaling, and management. If an orchestrator such as Kubernetes is used, validation takes place in a separate admission controller integrated into the control plane. An admission controller intercepts all requests to the control plane and may briefly interrupt the execution and, for example, may perform the validation of container image signatures. By using different admission controllers, different validation procedures may also be used. However, an administrator of a Kubernetes control plane can deactivate this validation by uninstalling the respective admission controller.

In non-orchestrated solutions such as Docker or Podman, the validation procedures for the container signature procedures are built-in and cannot be changed. That is, Docker, for example, only supports Docker Content Trust, which is based on Notary v1. In the Docker CE Community Edition, however, this is not enforced on the server side and is only implemented in the client.

In other examples, sufficiently privileged containers are managing container runtimes such as Docker by accessing a Docker socket. In this case, image validations of a Docker client program cannot be used, as this validation is performed exclusively in the Docker client program. Direct access to the Docker socket means that no validations are performed, as the Docker API does not provide for this.

If the deployment functionality is implemented within a container, it would also be advantageous if the validation of the container image could be transparently enforced outside the container. The main advantage would be that an attacker who has access to the Docker socket for managing an underlying container runtime cannot deactivate the validation of the container image in the event of a possible vulnerability within the Docker socket.

Furthermore, it would be desirable if there was a corresponding flexibility with regard to the available signature methods (possibly also independent of the container runtime environment used), as this would otherwise have to be retrofitted with the help of corresponding runtime environment-specific plugins, depending on the selected runtime environment.

A document EP 4 131 040 A1 discloses a method for generating a signed container image from a base container image.

A document US 11,055,428 1 describes a controller that is provided to construct and run a container from one or more encrypted container images without persisting any decrypted data from the one or more encrypted container images to non-volatile storage at any time.

A document discloses a data processing method based on a container engine and a related device.

Therefore, there is a need to provide a solution that offers a flexible and transparent option for signature validation for different methods, regardless of the selected container runtime environment.

### SUMMARY

The present disclosure is defined by the independent claims. Dependent claims describe embodiments thereof. This summary is provided to introduce a selection of concepts in a simplified form that are further described below in the detailed description. This summary is not intended to identify key features or essential features of the claimed subject matter, nor is it intended to be used to limit the scope of the claimed subject matter.

Traditionally, a container image may be downloaded from a registry and validated by a container runtime environment or an orchestrator during a loading process. If a signature validation of the container image fails, the loading process is aborted, and if the validation of the container image is successful, the loading process is continued by the container runtime environment and the content of the container image is unpacked and made available in a local cache of the runtime environment. For example, a container instance may then be instantiated.

Embodiments of the present disclosure are generally directed to solutions that offer a flexible and transparent option for signature validation for different methods, regardless of the selected container runtime environment.

Accordingly, a computer-implemented method for signature validation of container images is provided. The method may comprise: providing to a container runtime environment a request for a container image; establishing a network connection between the container runtime environment and a container registry comprising the container image; detecting, by a kernel module the network connection between the container runtime environment and the container registry; interrupting processing the request upon detecting, by the kernel module and based on the detected network connection, that the request includes an image pull request; sending, by the kernel module, information related to the image pull request to a validation component; requesting, by the validation component, based on the information related to the image pull request, an image manifest and a signature associated with the image manifest from the container registry; validating, by the validation component, the image manifest and the signature; and releasing the interrupted processing of the request for the container image upon successful validation or resetting the network connection between the container runtime environment and the container registry if the validation fails.

Thus, the method described above may carry out the validation of the signature transparently for the runtime environment.

In some embodiments, the method may further comprise loading, upon successful validation, the container image by the container runtime environment; unpacking, the container image in a local cache of the container runtime environment; and instantiating, by a user, a container instance based on the unpacked container image. Thus, improved efficiency and performance in deploying containerized applications is achieved.

In one or more embodiments, the kernel module may reside in an operating system of a computing device; and detecting may comprise capturing network traffic from the container runtime environment to the container registry using an extended Berkeley Packet Filter, eBPF, program loaded into the kernel module of an operating system of a computing device. The use of a kernel module allows for efficient and low-level integration with the operating system. This ensures minimal impact on the overall performance of the system, as the detection and monitoring processes are seamlessly integrated into the kernel. This advantage is especially important in high-performance or resource-constrained environments, where any additional overhead or latency can significantly impact the system's performance. In addition, the use of an eBPF program loaded into the kernel module further enhances the monitoring capabilities.

In some embodiments, the network connection may include an encrypted https connection, and the method may further comprise decrypting the encrypted https connection using an eCapture module of the eBPF program.

In one or more embodiments, the validation component may be a user-space signature validation component. The user-space validation component can be developed and maintained independently, making it easier to update or modify without affecting the underlying operating system or kernel. This flexibility facilitates the integration of the validation component into different environments and platforms.

In one or more embodiments, the method may further comprise decrypting encrypted traffic from the container runtime environment to the registry within the kernel to obtain a decrypted data stream; extracting an Uniform Resource Locator, URL, of the container image from the decrypted data stream; and informing the user-space signature validation component of the URL using the eBPF program.

In some embodiments, the validation component may be provided as a system service or as a correspondingly sufficiently privileged container.

In one or more embodiments, the validation component may support at least one container signing method. By supporting multiple container signing methods, the validation component offers flexibility in accommodating different security requirements or standards. Different signing methods may have different levels of security or may be preferred by different organizations or platforms.

In some embodiments, the at least one container signing method may comprise a Cosign or Notary v2 method.

In some embodiments, the at least one signing method may be mapped via a configuration file to URLs of container images in the container registry; and validating, by the validation component, the image manifest and the signature may comprise using the configuration file for validating.

In one or more embodiments, resetting the network connection between the container runtime environment and the container registry if the validation fails may comprise using a TCP reset to reset the network connection trying to call the image manifest of the container image. Therefore, validation is blocked by the eBPF program with the help of appropriate TCP resets until the signature validator has successfully validated the signed image manifest. By resetting the network connection between the container runtime environment and the container registry if the validation fails, the system can prevent the retrieval or execution of container images that have not passed the validation process. This ensures that only validated and trusted container images are used, reducing the risk of deploying potentially malicious or compromised images. The integration of the eBPF program and appropriate TCP resets adds an additional layer of security to the validation process. The eBPF program can intercept and analyze network traffic, including attempts to call the image manifest of the container image. If the validation fails, the eBPF program can trigger the appropriate TCP resets to block the communication, effectively preventing the deployment of the container image.

In some embodiments, validating, by the validation component, the image manifest and the signature may run in parallel to the request for the container image. Thus, the computational impact on the runtime environment would be minimized.

Other embodiments may include a non-transitory computer-readable storage medium storing computer-executable instructions which, when executed by at least one processor, may cause the at least one processor to perform the method according to any one of the methods described above.

Other embodiments may include a computer program product comprising instructions which, when executed by at least one processor, may cause the at least one processor to perform the method according to any one of the methods described above.

Other embodiments may include a system for signature validation of container images. The system may comprise: one or more processing devices; and one or more storage devices, the one or more storages devices storing computer-readable instructions that, when executed by the one or more of the processors, may cause the one or more of the processors to perform the method according to any one of the methods described above.

### BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a schematic diagram illustrating a system for transparent integration of container signature validation, according to the present disclosure.
Fig. 2 is a schematic diagram illustrating a computer-implemented method for transparent integration of container signature validation, according to the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

Conventionally, signature validations are permanently implemented in a client (e.g., as with Docker Content Trust) or available directly in a runtime environment (e.g., as with Podman).

Another possibility is to validate signatures, such as in the case of Docker Content Trust, with the help of corresponding legacy plugins. However, corresponding plugins for Docker cannot be used for alternative container runtime environments. Furthermore, there are currently no known plugin implementations that support solutions such as Cosign or similar, directly in the container runtime environment.

Kubernetes networking is a system for connecting containers, pods, and services running on a cluster of hosts. It provides a single, secure, and persistent network for all the components that make up a Kubernetes-based system.

In orchestrated environments based on Kubernetes, corresponding admission controllers may offer validation functionalities. For example, validation may be carried out within a control plane. A well-known example of implementation is the Connaisseur solution. Further implementations for the validation of container signatures with the help of Admission Controllers based on Open Policy Agent are also known.

Another approach may be based on an extended Berkeley Packet Filter (eBPF) such as "eCapture", which may be capable of recording and decrypting TLS-encrypted traffic on a system. eCapture may by able to capture SSL/TLS text content without a certificate authority (CA) using eBPF. For example, such a tool may be compatible with Linux/Android amd64/arm64 operating systems. A CA is a trusted entity that issues SSL certificates. These digital certificates are data files used to cryptographically link an entity with a public key.

In order to ensure that a Kubernetes-based system is running smoothly, it is important to monitor the performance of an underlying Linux-based operating system. **EBPF** is a Linux kernel technology that can be used to monitor, trace and influence the processing of kernel tasks on Linux systems. It allows code to be securely executed in the Linux kernel space, while maintaining process isolation. For example, eBPF runs sandboxed programs in a privileged context such as the Linux kernel. It is used to safely and efficiently extend the capabilities of the kernel without requiring to change kernel source code or load kernel modules.

Historically, the operating system has always been an ideal place to implement observability, security, and networking functionality due to the kernel's privileged ability to oversee and control the entire system. At the same time, an operating system kernel is hard to evolve due to its central role and high requirement towards stability and security. Therefore, eBPF can be used to monitor the performance of Kubernetes nodes at the container level. It can be used to track the resource utilization of nodes, and to detect any performance bottlenecks that may be occurring. It can also be used to detect issues such as slow network performance, and to identify any software or hardware issues that may be causing the issue.

In another example, eBPF may also be used to monitor the performance of applications running on Kubernetes clusters. It can be used to track the CPU and memory utilization of applications, and to detect any performance issues that are occurring. This can be especially useful when dealing with container-based systems, as it can provide visibility into the performance of individual containers. By leveraging eBPF, Kubernetes networking can be enhanced by adding more granular and secure network visibility. This can be used to provide deep packet inspection, throttle traffic, and filter malicious traffic. Moreover, eBPF may influence and control activities on a system, e.g., by stopping running processes in case of an event or an error. For example, this can be done temporarily by suspending the process or by killing the process altogether. When suspending a process, a process analysis may be done by other programs and if a result of the analysis fits a certain requirement, the suspended program shall be allowed to continue.

The approach of the present disclosure entails that the signature validation for a container image requested from a known container registry does not occur within the container runtime environment or an admission controller integrated with an orchestrator. Instead, the validation for the runtime environment is carried out transparently by using appropriate eBPF programs and a signature validator in the user space.

This validation model differs from sandboxed environments, where the execution environment is restricted and the runtime environment has no insight about the program. Container signatures are usually based on signing an image manifest stored in a registry using a suitable signature method (e.g., such as Notaryv2 or Cosign methods). A corresponding signature is stored either within the registry or on another system that is accessible for the runtime environment.

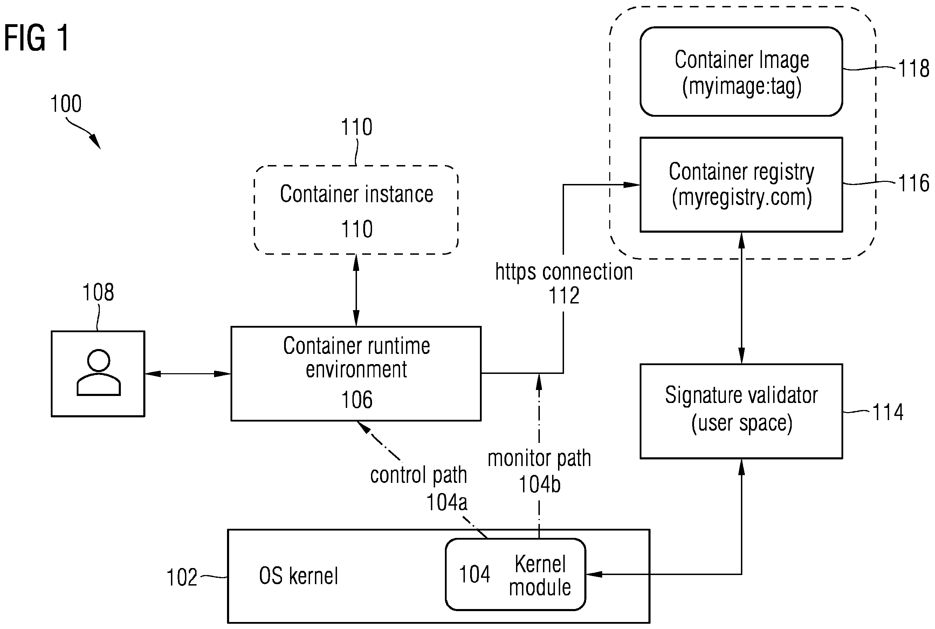

Fig. 1 is schematic diagram illustrating a system (100) for transparent integration of container signature validation.

A kernel module (104), which may implement an eBPF program and which may reside in a kernel (102) of an operating system, for example, of a Linux distribution, captures network traffic (e.g., an https connection (112)) via a monitoring path (104b) between a container runtime environment (106) and a container registry (116) within the kernel (102). As soon as an image pull operation for a container image (118) within a container registry (116) is detected, the eBPF program may interrupt the requesting process of the container runtime environment (106) and may pass the respective information to a signature validation component (114) in the user space.

In order to be able to perform validation of a container signature, it may be assumed that either the registries from where the container images are requested are well known and thus recognized by the eBPF program, or that all pull requests of the runtime environment (106) are captured by the eBPF program by recording the complete network traffic (112) via the monitor path (104b). The same applies to any authentication information for the container registry (116) that may be transferred.

Since the traffic to the respective container registry (116) is usually encrypted, it is necessary to decrypt the encrypted traffic within the kernel (102) and extract it within a data stream of an URL corresponding to the container image (118), analogous to the eCapture solution described above. If traffic to the container registry (116) is not encrypted, traffic may be easily traced using the eBPF program or any other conventional traffic capturing programs. Once a registry URL to an image manifest of the container image (118) has been determined, the corresponding user-space program, i.e. the signature validator (114), is informed by the eBPF program. For example, the validator (114) may be provided as a system service or as a correspondingly sufficiently privileged container and may support either one or several known signature methods - for example, Cosign or Notary v2. For example, the validator (114) may be a sufficiently privileged container having necessary process privileges, e.g., being assigned via Linux capabilities, Seccomp profiles and/or Linux namespaces. Which procedure should be applied to which registry URL (e.g., "myregistry.com") corresponding to which container images may be defined with the help of a corresponding configuration file, which can be used to configure the validator (114), wherein detected pull request operations for specific URLs are mapped to respective entries corresponding to one or more signature methods. The respective container registries and corresponding URLs of container images may be configured absolutely or via regular expressions.

If the registries are not publicly accessible and require authentication, it may be assumed that the corresponding authentication information can be read with the help of the eBPF program and that authentication can be carried out by the signature validator (114).

In a next step, the signature validator (114) requests and validates the image manifest (e.g., "myimage:tag") of the container image (118) stored on the registry (116) as well as the signature method for the signature method determined in the configuration file. If the validation is successful, the eBPF program is informed accordingly and the interrupted/blocked process is released. However, if the validation fails, the process may also be released, but a TCP connection that wants to retrieve the image manifest may be reset with the help of a TCP reset. For example, an indicator of a failed TLS validation may be a reset TCP connection established by the container runtime (106). If the container runtime environment (106) requests the connection again and wants to request the image manifest, the same process interruption and validation is performed using the eBPF program (e.g., using a control path (104a) and the monitor path 104b for the network connection 112) and the signature validator (114) as described above, so that the connection is permanently blocked by both components if it cannot be successfully performed. The validation of the signature is thus carried out transparently for the runtime environment (106). Finally, a user (108) may instantiate a container instance (110) based on the container image (118). For example, the container runtime environment (106) may load and unpack, upon successful validation, the container image (118) in a local cache and then the user (108) may instantiate a container instance (110) based on the unpacked container image.

Additionally and/or alternatively, signature validation may also run parallel to the container image pull process. Thus, the computational impact on the runtime environment (106) would be minimized. If the signature validation is negative, the image pull process may be stopped and the started container initialization process is stopped by the eBPF program (104). For example, validation is blocked by the eBPF program (e.g., via the control path (104a)) using appropriate TCP resets until the signature validator (114) has successfully validated the image manifest, or the container pull operation may be aborted if the parallel validation process is negative.

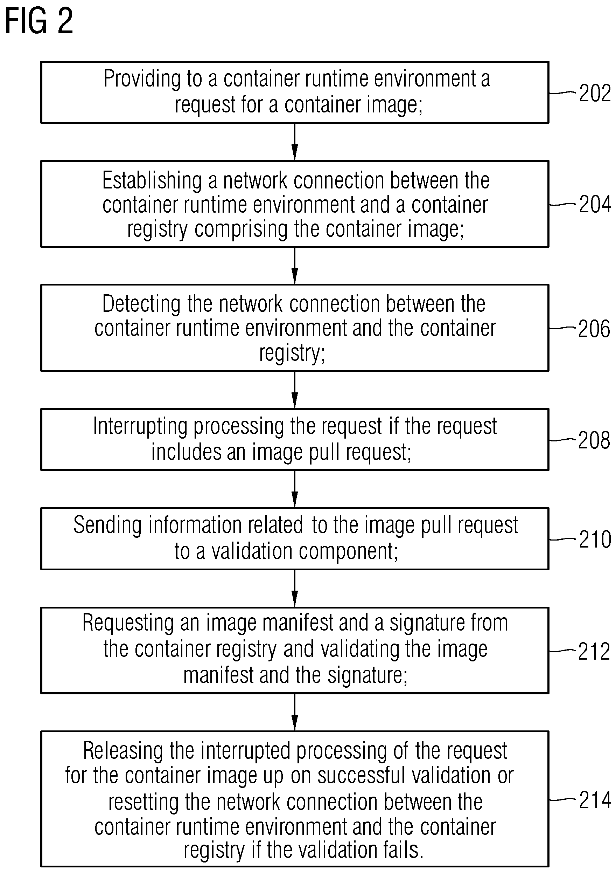

Fig. 2 is a flow diagram illustrating a method (200) for transparent integration of container signature validation. In step (202), a container runtime environment (106) may provide a request for a container image (118). Thus, a network connection (112) may be established between the container runtime environment (106) and a container registry (116) comprising the container image (118). Upon successful establishment, the network connection (112) may be detected (206), by a kernel module (104) residing in a kernel of an operating system and implementing an eBPF program. Upon detecting that the request may include an image pull request, the processing of the request may be interrupted (208) by the kernel module (104) directly and/or by the eBPF program. The kernel module (104) and/or the eBPF program may then send information related to the image pull request to a validation component (114), which may request (212) based on the information related to the image pull request, an image manifest and a signature associated with the image manifest from the container registry (116). For example, the signature associated with the image manifest may be a signature that a creator of the image used to sign the image manifest when initially loading the image into the container registry. Then, the validation component (114) may validate the received image manifest and the associated signature, and the interrupted processing of the request for the container image (118) may be released (214) upon successful validation or the network connection (112) between the container runtime environment (106) and the container registry (116) may be reset if the validation fails. For example, the validation component (114) may validate the image manifest and the associated_signature using a public key associated with a signer of the image manifester. Lastly, a user (108) may instantiate a container instance (110) based on the container image (118) loaded by the container runtime environment (106).

In one example configuration, the system (100) may include further processing units (processors) and memory. The processors may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. The processors may be programmable hardware capable of executing software instructions stored (to perform the methods described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (100) and/or the container runtime environment (106) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (100) and/or the container runtime environment (106) may also have input device(s) such as keyboard, mouse, pen, voice input, etc. and/or output device(s) such as a display, speakers, printer, etc. Also included in the system (100) may be one or more communication connections, such as LAN, WAN, point to point, etc. In embodiments, the connections may be operable to facilitate point-to-point communications, connection-oriented communications, connectionless communications, etc. The system (100) may further include interface circuitry configured to control input and output (I/O) data paths of the system (100). For example, such I/O data paths may include data paths such the control path (104a) and the monitor path (104b) of the kernel module (104).

The methods and systems described herein enable signature validation that is transparent to a runtime environment, wherein the signature validation occurs outside of the container runtime environment and is enforced by the kernel module directly and/or by the eBPF program loaded into a kernel of an operating system. The present disclosure allows different container signing methods to be used in the same signature validator, depending on the configuration chosen. Validation of container signatures can be transparently integrated into any container runtime without the need for custom plugins or admission controllers.

Although the present disclosure has been described in accordance with preferred embodiments, it should be clear for the person skilled in the art that modifications are possible in all embodiments. Further possible implementations or alternative solutions of the invention also encompass combinations - that are not explicitly mentioned herein - of features described above or below regarding the embodiments. The person skilled in the art may also add individual or isolated aspects and features to the most basic form of the present disclosure.

## Claims

1. A computer-implemented method (200) for signature validation of container images, the method comprising:
providing (202) to a container runtime environment (106) a request for a container image (118);
establishing (204) a network connection (112) between the container runtime environment (106) and a container registry (116) comprising the container image (118);
detecting (206), by a kernel module (104), network traffic on the network connection (112) between the container runtime environment (106) and the container registry (116);
interrupting (208) processing the request upon detecting, by the kernel module (104) and based on the detected network traffic, that the request includes an image pull request;
sending (210), by the kernel module (104), information related to the image pull request to a validation component (114);
requesting (212), by the validation component (114), based on the information related to the image pull request, an image manifest and a signature associated with the image manifest from the container registry (116);
validating, by the validation component (114), the image manifest and the associated signature; and
releasing (214) the interrupted processing of the request for the container image (118) upon successful validation or resetting the network connection (112) between the container runtime environment (106) and the container registry (116) if the validation fails.

2. **The** computer-implemented method of claim 1, further comprising loading, upon successful validation, the container image by the container runtime environment;
unpacking, the container image in a local cache of the container runtime environment; and
instantiating, by a user (108), a container instance (110) based on the unpacked container image.

3. **The** computer-implemented method of claim 1 or 2, wherein the kernel module (104) resides in an operating system of a computing device; and
wherein detecting comprises capturing network traffic from the container runtime environment to the container registry using an extended Berkeley Packet Filter, eBPF, program loaded into the kernel module (104) of the operating system.

4. The computer-implemented method of any of the preceding claims, wherein the network connection includes an encrypted https connection, and
the method further comprises decrypting the encrypted https connection using an eCapture module of the eBPF program.

5. The computer-implemented method of any of the preceding claims, wherein the validation component is a user-space signature validation component, and
wherein validating, by the validation component (114), the image manifest and the associated_signature comprises using a public key associated with a signer of the image manifest.

6. The computer-implemented method of any of claims 3 to 5, further comprising decrypting encrypted traffic from the container runtime environment to the registry within the kernel to obtain a decrypted data stream;
extracting an Uniform Resource Locator, URL, of the container image from the decrypted data stream; and
informing the user-space signature validation component of the URL using the eBPF program.

7. The computer-implemented method of any of the preceding claims, wherein the validation component is provided as a system service or as a correspondingly sufficiently privileged container.

8. The computer-implemented method of claim 7, wherein the validation component supports at least one container signing method.

9. The computer-implemented method of claim 8, wherein the at least one container signing method comprises a Cosign or Notary v2 method.

10. The computer-implemented method of claim 9, wherein the at least one signing method is mapped via a configuration file to URLs of container images in the container registry; and
wherein validating, by the validation component, the image manifest and the signature comprises using the configuration file for validating.

11. The computer-implemented method of any of the preceding claims, wherein resetting the network connection between the container runtime environment and the container registry if the validation fails comprises using a TCP reset to reset the network connection trying to call the image manifest of the container image.

12. The computer-implemented method of any of the preceding claims, wherein validating, by the validation component, the image manifest and the signature runs in parallel to the request for the container image.

13. The computer-implemented method of any of the preceding claims, further comprising: if the validation fails, stopping using the eBPF program, the image pull request and the network connection between the container runtime environment and the container registry.

14. A non-transitory computer-readable storage medium storing computer-executable instructions that, when executed by at least one processor, cause the at least one processor to perform the method of according to any of claims 1 to 13.

15. A computer program product comprising instructions which when executed by at least one processor, cause the at least one processor to perform the method according to any of claims 1 to 13.

16. A system (100) for signature validation of container images, the system comprising:
one or more processing devices; and
one or more storage devices, the one or more storages devices storing computer-readable instructions that, when executed by the one or more of the processors, cause the one or more of the processors to perform the method according to any of claims 1 to 13.

## Patentansprüche

1. Computerimplementiertes Verfahren (200) zur Signaturvalidierung von Container-Bildern, wobei das Verfahren Folgendes umfasst:
Bereitstellen (202) einer Anforderung für ein Container-Bild (118) an eine Container-Laufzeitumgebung (106);
Herstellen (204) einer Netzwerkverbindung (112) zwischen der Container-Laufzeitumgebung (106) und einer Container-Registry (116), umfassend das Container-Bild (118);
Erkennen (206) von Netzwerkverkehr auf der Netzwerkverbindung (112) zwischen der Container-Laufzeitumgebung (106) und der Container-Registry (116) durch ein Kernel-Modul (104);
Unterbrechen (208) einer Verarbeitung der Anforderung bei Erkennen, dass die Anforderung eine Bildabrufanforderung einschließt, durch das Kernel-Modul (104) und basierend auf dem erkannten Netzwerkverkehr;
Senden (210) von Informationen, die die Bildabrufanforderung betreffen, an eine Validierungskomponente (114) durch das Kernel-Modul (104);
Anfordern (212) eines Bildmanifests und einer mit dem Bildmanifest verknüpften Signatur von der Container-Registry (116) durch die Validierungskomponente (114) basierend auf den Informationen, die die Bildabrufanforderung betreffen;
Validieren des Bildmanifests und der verknüpften_Signatur durch die Validierungskomponente (114); und
Freigeben (214) der unterbrochenen Verarbeitung der Anforderung für das Container-Bild (118) bei erfolgreicher Validierung oder Zurücksetzen der Netzwerkverbindung (112) zwischen der Container-Laufzeitumgebung (106) und der Container-Registry (116), falls die Validierung fehlschlägt.

2. Computerimplementiertes Verfahren nach Anspruch 1, ferner umfassend ein Laden des Container-Bildes durch die Container-Laufzeitumgebung bei erfolgreicher Validierung;
Entpacken des Container-Bildes in einen lokalen Cache der Container-Laufzeitumgebung; und
Instanziieren einer Container-Instanz (110) durch einen Benutzer (108) basierend auf dem entpackten Container-Bild.

3. Computerimplementiertes Verfahren nach Anspruch 1 oder 2, wobei sich das Kernel-Modul (104) in einem Betriebssystem einer Rechenvorrichtung befindet; und
wobei das Erkennen ein Erfassen von Netzwerkverkehr aus der Container-Laufzeitumgebung zu der Container-Registry mithilfe eines erweiterten Berkeley-Paketfilter(eBPF)-Programms umfasst, das in das Kernel-Modul (104) des Betriebssystems geladen ist.

4. Computerimplementiertes Verfahren nach einem der vorhergehenden Ansprüche, wobei die Netzwerkverbindung eine verschlüsselte https-Verbindung einschließt und
das Verfahren ferner ein Entschlüsseln der verschlüsselten https-Verbindung mithilfe eines eCapture-Moduls des eBPF-Programms umfasst.

5. Computerimplementiertes Verfahren nach einem der vorhergehenden Ansprüche, wobei die Validierungskomponente eine Benutzerbereichssignaturvalidierungskomponente ist und wobei das Validieren des Bildmanifests und der verknüpften_Signatur durch die Validierungskomponente (114) ein Verwenden eines öffentlichen Schlüssels umfasst, der mit einem Unterzeichner des Bildmanifests verknüpft ist.

6. Computerimplementiertes Verfahren nach einem der Ansprüche 3 bis 5, ferner umfassend ein Entschlüsseln von verschlüsseltem Verkehr aus der Container-Laufzeitumgebung in die Registry innerhalb des Kernels, um einen entschlüsselten Datenstrom zu erhalten;
Extrahieren einer Internetadresse, URL, des Container-Bildes aus dem entschlüsselten Datenstrom; und
Informieren der Benutzerbereichssignaturvalidierungskomponente über die URL mithilfe des eBPF-Programms.

7. Computerimplementiertes Verfahren nach einem der vorhergehenden Ansprüche, wobei die Validierungskomponente als ein Systemdienst oder als ein entsprechend ausreichend privilegierter Container bereitgestellt ist.

8. Computerimplementiertes Verfahren nach Anspruch 7, wobei die Validierungskomponente mindestens ein Container-Signierungsverfahren unterstützt.

9. Computerimplementiertes Verfahren nach Anspruch 8, wobei das mindestens eine Container-Signierungsverfahren ein Cosign- oder Notary-v2-Verfahren umfasst.

10. Computerimplementiertes Verfahren nach Anspruch 9, wobei das mindestens eine Signierungsverfahren über eine Konfigurationsdatei URLs von Container-Bildern in der Container-Registry zugeordnet ist; und
wobei das Validieren des Bildmanifests und der Signatur durch die Validierungskomponente ein Verwenden der Konfigurationsdatei zum Validieren umfasst.

11. Computerimplementiertes Verfahren nach einem der vorhergehenden Ansprüche, wobei das Zurücksetzen der Netzwerkverbindung zwischen der Container-Laufzeitumgebung und der Container-Registry, falls die Validierung fehlschlägt, ein Verwenden einer TCP-Zurücksetzung umfasst, um die Netzwerkverbindung zurückzusetzen, die versucht, das Bildmanifest des Container-Bildes aufzurufen.

12. Computerimplementiertes Verfahren nach einem der vorhergehenden Ansprüche, wobei das Validieren des Bildmanifests und der Signatur durch die Validierungskomponente parallel zu der Anforderung für das Container-Bild abläuft.

13. Computerimplementiertes Verfahren nach einem der vorhergehenden Ansprüche, ferner umfassend: falls die Validierung fehlschlägt, Beenden des Verwendens des eBPF-Programms, der Bildabrufanforderung und der Netzwerkverbindung zwischen der Container-Laufzeitumgebung und der Container-Registry.

14. Nichttransitorisches, computerlesbares Speichermedium, das computerausführbare Anweisungen speichert, die, wenn sie durch mindestens einen Prozessor ausgeführt werden, den mindestens einen Prozessor dazu veranlassen, das Verfahren nach einem der Ansprüche 1 bis 13 durchzuführen.

15. Computerprogrammprodukt, umfassend Anweisungen, die, wenn sie durch mindestens einen Prozessor ausgeführt werden, den mindestens einen Prozessor dazu veranlassen, das Verfahren nach einem der Ansprüche 1 bis 13 durchzuführen.

16. System (100) zur Signaturvalidierung von Container-Bildern, wobei das System Folgendes umfasst:
eine oder mehrere Verarbeitungsvorrichtungen; und
eine oder mehrere Speichervorrichtungen, wobei die eine oder die mehreren Speichervorrichtungen computerlesbare Anweisungen speichern, die, wenn sie durch den einen oder die mehreren Prozessoren ausgeführt werden, den einen oder die mehreren Prozessoren dazu veranlassen, das Verfahren nach einem der Ansprüche 1 bis 13 durchzuführen.

## Revendications

1. Procédé mis en œuvre par ordinateur (200) pour la validation de signature d'images de conteneurs, le procédé comprenant :
la fourniture (202) à un environnement d'exécution de conteneurs (106) d'une demande d'une image de conteneur (118) ;
l'établissement (204) d'une connexion réseau (112) entre l'environnement d'exécution de conteneurs (106) et un registre de conteneurs (116) comprenant l'image de conteneur (118) ;
la détection (206), par un module noyau (104), du trafic réseau sur la connexion réseau (112) entre l'environnement d'exécution de conteneurs (106) et le registre de conteneurs (116) ;
l'interruption (208) du traitement de la demande lors de la détection, par le module noyau (104) et sur la base du trafic réseau détecté, que la demande comprend une demande de récupération d'image ;
l'envoi (210), par le module noyau (104), d'informations relatives à la demande de récupération d'image à un composant de validation (114) ;
la demande (212), par le composant de validation (114), sur la base des informations relatives à la demande de récupération d'image, d'un manifeste d'image et d'une signature associée au manifeste d'image au registre de conteneurs (116) ;
la validation, par le composant de validation (114), du manifeste d'image et de la signature associée ; et
la reprise (214) du traitement interrompu de la demande de l'image de conteneur (118) en cas de validation réussie, ou la réinitialisation de la connexion réseau (112) entre l'environnement d'exécution de conteneurs (106) et le registre de conteneurs (116) si la validation échoue.

2. Procédé mis en œuvre par ordinateur selon la revendication 1, comprenant en outre le chargement, en cas de validation réussie, de l'image de conteneur par l'environnement d'exécution de conteneurs ;
la décompression de l'image de conteneur dans une mémoire cache locale de l'environnement d'exécution de conteneurs ; et
l'instanciation, par un utilisateur (108), d'une instance de conteneur (110) sur la base de l'image de conteneur décompressée.

3. Procédé mis en œuvre par ordinateur selon la revendication 1 ou 2, dans lequel le module noyau (104) réside dans un système d'exploitation d'un dispositif informatique ; et
dans lequel la détection comprend la capture du trafic réseau provenant de l'environnement d'exécution de conteneurs vers le registre de conteneurs en utilisant un programme de filtre de paquets de Berkeley étendu, eBPF, chargé dans le module noyau (104) du système d'exploitation.

4. Procédé mis en œuvre par ordinateur selon l'une des revendications précédentes, dans lequel la connexion réseau comprend une connexion https chiffrée, et
le procédé comprend en outre le déchiffrement de la connexion https chiffrée en utilisant un module eCapture du programme eBPF.

5. Procédé mis en œuvre par ordinateur selon l'une des revendications précédentes, dans lequel le composant de validation est un composant de validation de signature en espace utilisateur, et
dans lequel la validation, par le composant de validation (114), du manifeste d'image et de la signature associée comprend l'utilisation d'une clé publique associée à un signataire du manifeste d'image.

6. Procédé mis en œuvre par ordinateur selon l'une des revendications 3 à 5, comprenant en outre le déchiffrement du trafic chiffré provenant de l'environnement d'exécution de conteneurs vers le registre au sein du noyau afin d'obtenir un flux de données déchiffré ;
l'extraction d'un localisateur de ressources uniforme, URL, de l'image de conteneur à partir du flux de données déchiffré ; et
l'information du composant de validation de signature en espace utilisateur de l'URL en utilisant le programme eBPF.

7. Procédé mis en œuvre par ordinateur selon l'une des revendications précédentes, dans lequel le composant de validation est fourni sous la forme d'un service système ou d'un conteneur suffisamment privilégié en conséquence.

8. Procédé mis en œuvre par ordinateur selon la revendication 7, dans lequel le composant de validation prend en charge au moins une méthode de signature de conteneur.

9. Procédé mis en œuvre par ordinateur selon la revendication 8, dans lequel l'au moins une méthode de signature de conteneur comprend une méthode Cosign ou Notary v2.

10. Procédé mis en œuvre par ordinateur selon la revendication 9, dans lequel l'au moins une méthode de signature est mappée via un fichier de configuration vers des URL d'images de conteneurs dans le registre de conteneurs ; et
dans lequel la validation, par le composant de validation, du manifeste d'image et de la signature comprend l'utilisation du fichier de configuration pour la validation.

11. Procédé mis en œuvre par ordinateur selon l'une des revendications précédentes, dans lequel la réinitialisation de la connexion réseau entre l'environnement d'exécution de conteneurs et le registre de conteneurs, en cas d'échec de la validation, comprend l'utilisation d'une réinitialisation TCP pour réinitialiser la connexion réseau essayant d'appeler le manifeste d'image de l'image de conteneur.

12. Procédé mis en œuvre par ordinateur selon l'une des revendications précédentes, dans lequel la validation, par le composant de validation, du manifeste d'image et de la signature s'exécute en parallèle à la demande de l'image de conteneur.

13. Procédé mis en œuvre par ordinateur selon l'une des revendications précédentes, comprenant en outre : en cas d'échec de la validation, l'arrêt, au moyen du programme eBPF, de la demande de récupération d'image et de la connexion réseau entre l'environnement d'exécution de conteneurs et le registre de conteneurs.

14. Support de stockage non transitoire lisible par ordinateur stockant des instructions exécutables par ordinateur qui, lorsqu'elles sont exécutées par au moins un processeur, amènent l'au moins un processeur à réaliser le procédé selon l'une des revendications 1 à 13.

15. Produit de programme informatique comprenant des instructions qui, lorsqu'elles sont exécutées par au moins un processeur, amènent l'au moins un processeur à réaliser le procédé selon l'une des revendications 1 à 13.

16. Système (100) pour la validation de signature d'images de conteneurs, le système comprenant :
un ou plusieurs dispositifs de traitement ; et
un ou plusieurs dispositifs de stockage, le ou les plusieurs dispositifs de stockage stockant des instructions lisibles par ordinateur qui, lorsqu'elles sont exécutées par le ou les plusieurs processeurs, amènent le ou les plusieurs processeurs à réaliser le procédé selon l'une des revendications 1 à 13.
